# EUROPEAN PATENT APPLICATION

(11) **EP 4 412 383 A1**
(43) Date of publication of application: **07.08.2024**
(21) Application number: 22882970.1
(22) Date of filing: 21.10.2022
(51) Int. Cl.: H04W 76/11

(54) **COMMUNICATION METHOD AND APPARATUS**

(30) Priority: 22.10.2021 CN 202111236395
(71) Applicant: Huawei Technologies Co., Ltd., Shenzhen, Guangdong 518129 (CN)
(72) Inventor: XU, Xiaoying, Shenzhen, Guangdong 518129 (CN); WANG, Yan, Shenzhen, Guangdong 518129 (CN); XU, Bin, Shenzhen, Guangdong 518129 (CN); GUO, Yinghao, Shenzhen, Guangdong 518129 (CN)
(74) Representative: Grünecker Patent- und Rechtsanwälte PartG mbB
(86) International application number: PCT/CN2022/126619
(87) International publication number: WO 2023/066365

(57) **Abstract**

Embodiments of this application provide a communication method and apparatus. The method includes: A DU receives uplink data from a terminal device; the DU allocates a first cell radio network temporary identifier C-RNTI and a first DU interface identifier to the terminal device; the DU sends a first message to a central unit CU, where the first message includes the first C-RNTI and the first DU interface identifier; and the DU receives a second message from the CU, where the second message includes the first C-RNTI or the first DU interface identifier. The communication method and apparatus provided in embodiments of this application can reduce processing load of the DU and improve communication efficiency.

## Description

This application claims priority to Chinese Patent Application No. 202111236395.1, filed with the China National Intellectual Property Administration on October 22, 2021 and entitled "COMMUNICATION METHOD AND APPARATUS", which is incorporated herein by reference in its entirety.

### TECHNICAL FIELD

Embodiments of this application relate to the communication field, and more specifically, to a communication method and apparatus.

### BACKGROUND

In a communication system, a terminal device in an idle state or an inactive state may perform data transmission without switching of a radio resource control (radio resource control, RRC) state. Such a data transmission mechanism is small data transmission (small data transmission, SDT). In a scenario in which a central unit (central unit, CU) and a distributed unit (distributed unit, DU) are split, each time the terminal device initiates SDT, the DU needs to initiate a signaling interaction process with the CU, to resume transmission between the DU and the CU. This causes a sending delay, and reduces data transmission efficiency.

### SUMMARY

Embodiments of this application provide a communication method and apparatus, to reduce processing load of a DU and improve communication efficiency.

According to a first aspect, a communication method is provided. The method is applied to a distributed unit DU, or may be performed by a chip or a circuit configured in the DU. This is not limited in this application. The method includes: receiving uplink data from a terminal device; allocating a first cell radio network temporary identifier C-RNTI and a first DU interface identifier to the terminal device; sending a first message to a central unit CU, where the first message includes the first C-RNTI and the first DU interface identifier; and receiving a second message from the CU, where the second message includes the first C-RNTI or the first DU interface identifier.

Based on the foregoing solution, in an SDT procedure, the CU does not need to send a context setup request to the DU, but needs only to send, to the DU, a message that carries a CU interface identifier and the DU interface identifier that are stored in the DU, and notify the DU of the C-RNTI newly allocated by the DU to UE, so that the DU scrambles a PDCCH by using the new C-RNTI. This avoids redundant configuration interaction between the CU and the DU, and can reduce processing load of the DU and improve processing efficiency.

With reference to the first aspect, in some implementations of the first aspect, the terminal device is in a radio resource control RRC idle state or an RRC inactive state.

With reference to the first aspect, in some implementations of the first aspect, the method further includes: Before receiving the uplink data, the DU stores context information of the terminal device, where the context information includes a second C-RNTI; and after receiving the second message, updates the second C-RNTI to the first C-RNTI.

With reference to the first aspect, in some implementations of the first aspect, the method further includes: after allocating the first C-RNTI and the first DU interface identifier to the terminal device, storing the first C-RNTI and the first DU interface identifier; and after receiving the second message, deleting the first DU interface identifier, or updating the second DU interface identifier to the first DU interface identifier.

Based on the foregoing solution, after the DU determines an identity of the UE and determines the context information of the UE, the DU retrieves the first DU interface identifier allocated to the UE or updates the second DU interface identifier to the first DU interface identifier. This saves interface identifiers and storage resources.

With reference to the first aspect, in some implementations of the first aspect, when the second message includes the first DU interface identifier, the updating the second C-RNTI to the first C-RNTI specifically includes: determining the first C-RNTI based on the first DU interface identifier; and updating the second C-RNTI to the first C-RNTI.

With reference to the first aspect, in some implementations of the first aspect, when the second message includes the first C-RNTI, the deleting the first DU interface identifier, or updating the second DU interface identifier to the first DU interface identifier specifically includes: determining the first DU interface identifier based on the first C-RNTI; and deleting the first DU interface identifier, or updating the second DU interface identifier to the first DU interface identifier.

With reference to the first aspect, in some implementations of the first aspect, the context information further includes the second DU interface identifier.

With reference to the first aspect, in some implementations of the first aspect, the receiving uplink data from a terminal device specifically includes: receiving the uplink data from the terminal device in a random access procedure.

With reference to the first aspect, in some implementations of the first aspect, the first message further includes an RRC resume request message, and the uplink data includes the RRC resume request message.

With reference to the first aspect, in some implementations of the first aspect, the second message further includes the second DU interface identifier and a second CU interface identifier, and the second CU interface identifier is stored in the context information.

With reference to the first aspect, in some implementations of the first aspect, the second message is a context modification request message.

It should be noted that the context modification request message may also be referred to as a terminal context modification request message.

With reference to the first aspect, in some implementations of the first aspect, the method further includes: sending a context modification response message to the CU.

It should be noted that the context modification response message may also be referred to as a terminal context modification response message.

Based on the foregoing solution, a UE context modification procedure is used between the CU and the DU, to avoid redundant configuration interaction between the CU and the DU. This can reduce processing load of the DU and improve processing efficiency.

With reference to the first aspect, in some implementations of the first aspect, the method further includes: before receiving the uplink data, receiving an RRC release message and indication information from the CU, where the indication information indicates the DU to store the context information of the terminal device; and sending the RRC release message to the terminal device.

According to a second aspect, a communication method is provided. A distributed DU receives uplink data from a terminal device; the DU allocates a first cell radio network temporary identifier C-RNTI and a first DU interface identifier to the terminal device; the DU sends a first message to a central unit CU, where the first message includes the first C-RNTI and the first DU interface identifier; and the CU sends a second message to the DU, where the second message includes the first C-RNTI or the first DU interface identifier.

Based on the foregoing solution, in an SDT procedure, the CU notifies the DU of the C-RNTI newly allocated by the DU to the UE. This avoids redundant configuration interaction between the CU and the DU, and can reduce processing load of the DU and improve processing efficiency.

With reference to the second aspect, in some implementations of the second aspect, the terminal device is in an RRC idle state or an RRC inactive state.

With reference to the second aspect, in some implementations of the second aspect, the method further includes: Before receiving the uplink data, the DU stores context information of the terminal device, where the context information includes a second C-RNTI; and after receiving the second message, the DU updates the second C-RNTI to the first C-RNTI.

With reference to the second aspect, in some implementations of the second aspect, after the DU allocates the first C-RNTI and the first DU interface identifier to the terminal device, the DU stores the first C-RNTI and the first DU interface identifier. After receiving the second message, the DU deletes the first DU interface identifier, or updates the second DU interface identifier to the first DU interface identifier.

With reference to the second aspect, in some implementations of the second aspect, when the second message includes the first DU interface identifier, the updating the second C-RNTI to the first C-RNTI specifically includes: The DU determines the first C-RNTI based on the first DU interface identifier; and the DU updates the second C-RNTI to the first C-RNTI.

With reference to the second aspect, in some implementations of the second aspect, when the second message includes the first C-RNTI, the deleting the first DU interface identifier, or updating the second DU interface identifier to the first DU interface identifier specifically includes: The DU determines the first DU interface identifier based on the first C-RNTI; and the DU deletes the first DU interface identifier, or updates the second DU interface identifier to the first DU interface identifier.

With reference to the second aspect, in some implementations of the second aspect, the context information further includes the second DU interface identifier.

With reference to the second aspect, in some implementations of the second aspect, that a DU receives uplink data from a terminal device specifically includes: The DU receives the uplink data from the terminal device in a random access procedure.

With reference to the second aspect, in some implementations of the second aspect, the first message further includes an RRC resume request message, and the uplink data includes the RRC resume request message.

With reference to the second aspect, in some implementations of the second aspect, the second message further includes the second DU interface identifier and a second CU interface identifier, and the second CU interface identifier is stored in the context information.

With reference to the second aspect, in some implementations of the second aspect, the second message is a context modification request message.

It should be noted that the context modification request message may also be referred to as a terminal context modification request message.

With reference to the second aspect, in some implementations of the second aspect, the method further includes: receiving a context modification response message from the DU.

It should be noted that the context modification response message may also be referred to as a terminal context modification response message.

Based on the foregoing solution, a UE context modification procedure is used between the CU and the DU, to avoid redundant configuration interaction between the CU and the DU. This can reduce processing load of the DU and improve processing efficiency.

With reference to the second aspect, in some implementations of the second aspect, the method further includes: Before the DU receives the uplink data, the CU sends an RRC release message and indication information to the DU, where the indication information indicates the DU to store the context information of the terminal device; and the DU sends the RRC release message to the terminal device.

According to a third aspect, a communication apparatus is provided, including functional modules configured to implement the method according to any possible implementation of the first aspect.

According to a fourth aspect, a communication apparatus is provided, including functional modules configured to implement the method according to any possible implementation of the second aspect.

According to a fifth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any possible implementation of the first aspect by using a logic circuit or by executing code instructions.

According to a sixth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any possible implementation of the second aspect by using a logic circuit or by executing code instructions.

According to a seventh aspect, a computer-readable storage medium is provided. The computer-readable storage medium stores a computer program or instructions. When the computer program or the instructions are executed, the method according to any possible implementation of the first aspect is implemented.

According to an eighth aspect, a computer-readable storage medium is provided. The computer-readable storage medium stores a computer program or instructions. When the computer program or the instructions are executed, the method according to any possible implementation of the second aspect is implemented.

According to a ninth aspect, a computer program product including instructions is provided. When the instructions are run, the method according to any possible implementation of the first aspect is implemented.

According to a tenth aspect, a computer program product including instructions is provided. When the instructions are run, the method according to any possible implementation of the second aspect is implemented.

According to an eleventh aspect, a computer program is provided. The computer program includes code or instructions. When the code or the instructions are run, the method according to any possible implementation of the first aspect is implemented.

According to a twelfth aspect, a computer program is provided. The computer program includes code or instructions. When the code or the instructions are run, the method according to any possible implementation of the second aspect is implemented.

According to a thirteenth aspect, a chip system is provided. The chip system includes a processor, and may further include a memory, and is configured to implement the method according to any possible implementation of the first aspect. The chip system may include a chip, or may include a chip and another discrete component.

According to a fourteenth aspect, a chip system is provided. The chip system includes a processor, and may further include a memory, and is configured to implement the method according to any possible implementation of the second aspect. The chip system may include a chip, or may include a chip and another discrete component.

According to a fifteenth aspect, a communication system is provided. The communication system includes the apparatus according to the third aspect or the fourth aspect.

### BRIEF DESCRIPTION OF DRAWINGS

FIG. 1 is a schematic diagram of a network architecture to which an embodiment of this application is applicable;
FIG. 2 is a schematic diagram of a CU-DU split architecture according to an embodiment of this application;
FIG. 3 is a schematic diagram of another CU-DU split architecture according to an embodiment of this application;
FIG. 4 is a schematic diagram of protocol stack distribution according to an embodiment of this application;
FIG. 5 is a schematic flowchart of a communication method 500 according to an embodiment of this application;
FIG. 6 is a schematic flowchart of a communication method 600 according to an embodiment of this application;
FIG. 7 is a schematic block diagram of a communication apparatus 700 according to an embodiment of this application; and
FIG. 8 is a schematic block diagram of another communication apparatus 800 according to an embodiment of this application.

### DESCRIPTION OF EMBODIMENTS

Technical solutions provided in embodiments of this application may be applied to various communication systems, for example, a long term evolution (long term evolution, LTE) system, a 5th generation (5th generation, 5G) mobile communication system, a Wi-Fi system, a future communication system, a system integrating a plurality of communication systems, or the like. This is not limited in embodiments of this application. 5G may also be referred to as new radio (new radio, NR).

The technical solutions provided in embodiments of this application may be applied to various communication scenarios, for example, may be applied to one or more of the following communication scenarios: enhanced mobile broadband (enhanced mobile broadband, eMBB), ultra-reliable low-latency communication (ultra-reliable low-latency communication, URLLC), machine type communication (machine type communication, MTC), massive machine type communication (massive machine type communications, mMTC), device-to-device (device-to-device, D2D), vehicle to everything (vehicle to everything, V2X), vehicle to vehicle (vehicle to vehicle, V2V), internet of things (internet of things, IoT), and the like.

In embodiments of this application, "/" may represent an "or" relationship between associated objects. For example, A/B may represent A or B. The term "and/or" may indicate that there are three relationships between the associated obj ects. For example, A and/or B may represent the following three cases: Only A exists, both A and B exist, and only B exists. A and B may be singular or plural. In embodiments of this application, terms such as "first" or "second" may be used to distinguish between technical features with same or similar function. The words such as "first" and "second" do not limit a quantity and an execution sequence, and the words such as "first" and "second" do not limit a definite difference. In embodiments of this application, terms such as "example" or "for example" are used to represent giving an example, an illustration, or a description. Any embodiment or design scheme described with "example" or "for example" should not be explained as being more preferred or having more advantages than another embodiment or design scheme. A word such as "example" or "for example" is used to present a related concept in a specific manner for ease of understanding.

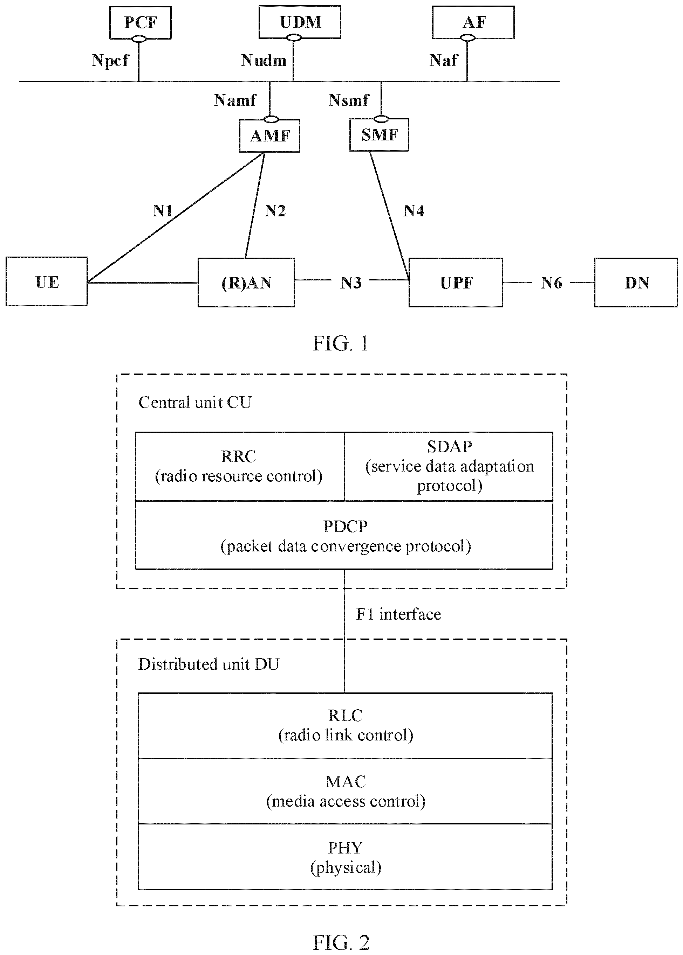

FIG. 1 is a schematic diagram of a network architecture to which an embodiment of this application is applicable. As shown in FIG. 1, a terminal device may access a wireless network, to obtain a service of an external network (for example, a data network (data network, DN)) through the wireless network, or communicate with another device through the wireless network, for example, communicate with another terminal device. Network elements in the wireless network include a radio access network (radio access network, RAN) network element and a core network (core network, CN) network element. A RAN is configured to connect a terminal device to the wireless network, and a CN is configured to manage the terminal device and provide a gateway for communicating with the DN. In embodiments of this application, a device in the RAN may be referred to as an access network device, a device in the CN may be referred to as a core network device, and the access network device and the core network device may be collectively referred to as a network device. One access network device may provide a service for at least one terminal device. For example, one access network device may provide a service for two terminal devices (not shown in FIG. 1).

In FIG. 1, Npcf, Nudm, Naf, Namf, Nsmf, N1, N2, N3, N4, and N6 are interface sequence numbers. For meanings of these interface sequence numbers, refer to meanings defined in the related standard protocols. This is not limited herein.

It may be understood that a 5G communication system is used as an example in FIG. 1. The solutions in embodiments of this application may alternatively be applied to another possible communication system, for example, a 6th generation (the 6th generation, 6G) communication system. The foregoing network elements or functions may be network elements in a hardware device, may be software functions run on dedicated hardware, or may be instantiated virtualization functions on a platform (for example, a cloud platform). Optionally, the foregoing network elements or functions may be implemented by one device, or may be jointly implemented by a plurality of devices, or may be one functional module in one device. This is not specifically limited in embodiments of this application.

The following separately describes in detail the terminal device, the RAN, the CN, and the DN in FIG. 1.

### 1. Terminal device

The terminal device includes a device that provides voice and/or data connectivity for a user, and may include, for example, a handheld device with a wireless connection function or a processing device connected to a wireless modem. The terminal device may communicate with a core network through a radio access network (radio access network, RAN), and exchange a voice and/or data with the RAN. The terminal device may include user equipment (user equipment, UE), a wireless terminal device, a mobile terminal device, a device-to-device (device-to-device, D2D) terminal device, a vehicle to everything (vehicle to everything, V2X) terminal device, a machine-to-machine/machine type communication (machine-to-machine /machine-type communications, M2M/MTC) terminal device, an internet of things (internet of things, IoT) terminal device, a subscriber unit, a subscriber station, a mobile station, a remote station, an access point (access point, AP), a remote terminal, an access terminal, a user terminal, a user agent, user equipment, or the like. For example, the terminal device may include a mobile phone (or referred to as a "cellular" phone), a computer having a mobile terminal device, or a portable, pocket-sized, handheld, or computer built-in mobile apparatus. For example, the terminal device may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal includes an information sensing device such as a barcode, radio frequency identification (radio frequency identification, RFID), a sensor, a global positioning system (global positioning system, GPS), or a laser scanner.

### 2. RAN device

The RAN may include one or more RAN devices, and an interface between the RAN device and the terminal device may be a Uu interface (or referred to as an air interface). Certainly, in future communication, names of these interfaces may remain unchanged, or may be replaced by other names. This is not limited in this application.

The RAN device is an access device used by the terminal device to access a mobile communication system in a wireless manner, and may be a base station, an evolved NodeB (evolved NodeB, eNodeB), a transmission reception point (transmission reception point, TRP), a next generation NodeB (next generation NodeB, gNB) in the 5G mobile communication system, a base station in a future mobile communication system, an access node in a Wi-Fi system, or the like. The RAN device may include a central unit (central unit, CU), or a distributed unit (distributed unit, DU), or include the CU and the DU.

In embodiments of this application, functions of the RAN device may alternatively be implemented by using a plurality of network function entities, and each network functional entity is configured to implement some functions of the RAN device. These network function entities may be network elements in hardware devices, or may software functions run on dedicated hardware, or may be instantiated virtualization functions on a platform (for example, a cloud platform).

### (1) Protocol layer structure

Communication between the RAN device and the terminal device is performed in accordance with a specific protocol layer structure. For example, a control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include a PDCP layer, an RLC layer, a MAC layer, and a physical layer. In possible implementation, a service data adaptation protocol (service data adaptation protocol, SDAP) layer may be further included above the PDCP layer.

Data transmission between the access network device and the terminal device is used as an example. The data transmission needs to go through the user plane protocol layer such as the SDAP layer, the PDCP layer, the RLC layer, the MAC layer, and the physical layer. The SDAP layer, the PDCP layer, the RLC layer, the MAC layer, and the physical layer are also collectively referred to as an access stratum. For example, at least one data radio bearer (data radio bearer, DRB) is established between the access network device and the terminal device for data transmission. Each DRB may correspond to a group of functional entity sets, for example, include one PDCP layer entity, at least one RLC layer entity corresponding to the PDCP layer entity, at least one MAC layer entity corresponding to the at least one RLC layer entity, and at least one physical layer entity corresponding to the at least one MAC layer entity. It should be noted that at least one signaling radio bearer (signaling radio bearer, SRB) may also be established between the access network device and the terminal device for signaling transmission. The DRB and the SRB are collectively referred to as a radio bearer (radio bearer, RB).

### (2) CU and DU

In embodiments of this application, the RAN device may include one or more central units (central unit, CU) and one or more distributed units (distributed unit, DU), and a plurality of DUs may be centrally controlled by one CU. For example, an interface between the CU and the DU may be referred to as an F1 interface. A control plane (control plane, CP) interface may be an F1-C interface, and a user plane (user plane, UP) interface may be an F1-U interface. The CU and the DU may be classified based on the protocol layers of the wireless network: For example, as shown in FIG. 2, a function of a protocol layer above the PDCP layer is set on the CU, and a function of a protocol layer below the PDCP layer is set on the DU. For example, the DU may include an RLC layer, a MAC layer, and a physical (Physical, PHY) layer.

In a possible design, the DU may include a function of the RLC layer, a function of the MAC layer, and some functions of the PHY layer. For example, the DU may include a function of an upper layer in the PHY layer. The function of the upper layer in the PHY layer may include a cyclic redundancy check (cyclic redundancy check, CRC) function, channel coding, rate matching, scrambling, modulation, and layer mapping. Alternatively, the function of the upper layer in the PHY layer may include cyclic redundancy check, channel coding, rate matching, scrambling, modulation, layer mapping, and precoding. A function of a lower layer in the PHY layer may be implemented by another network entity independent of the DU. The function of the lower layer in the PHY layer may include precoding, resource mapping, physical antenna mapping, and radio frequency functions. Alternatively, the function of the lower layer in the PHY layer may include resource mapping, physical antenna mapping, and radio frequency functions. Function division of the upper layer and the lower layer in the PHY layer is not limited in embodiments of this application. When the function of the lower layer in the PHY layer may be implemented by another network entity independent of the DU, that the DU sends data or information to another communication apparatus (for example, a terminal device or a core network device) may be understood as: The DU performs functions of the RLC layer and the MAC layer, and some functions of the PHY layer. For example, after the DU completes the functions of the RLC layer and the MAC layer, and cyclic redundancy check, channel coding, rate matching, scrambling, modulation, and layer mapping, the network entity that is independent of the DU and that performs the function of the lower layer in the PHY layer performs remaining functions of mapping and sending on a physical resource.

It may be understood that, division of processing functions of the CU and the DU based on the protocol layers is merely an example, and the processing functions may alternatively be divided in another manner. For example, functions of the protocol layers above the RLC layer are set on the CU, and functions of the RLC layer and the protocol layers below the RLC layer are set on the DU. For another example, the CU or the DU may be further divided into functions having more protocol layers. For another example, the CU or the DU may be further divided into some processing functions having protocol layers. In a design, some functions of the RLC layer and functions of protocol layers above the RLC layer are set on the CU, and remaining functions of the RLC layer and functions of protocol layers below the RLC layer are set on the DU. In another design, division of functions of the CU or the DU may alternatively be performed based on service types or other system requirements. For example, division may be performed based on latencies. Functions whose processing time needs to satisfy a latency requirement are set on the DU, and functions whose processing time does not need to satisfy the latency requirement are set on the CU. In another design, the CU may alternatively have one or more functions of the core network. For example, the CU may be set on a network side for ease of centralized management. The DU may have a plurality of radio frequency functions, or the radio frequency functions may be set remotely. This is not limited in embodiments of this application.

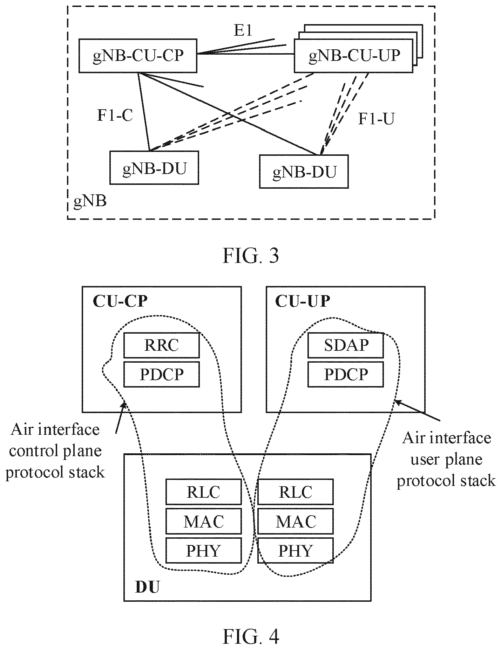

For example, the functions of the CU may be implemented by one entity or different entities. For example, as shown in FIG. 3, functions of a CU may be further divided, that is, a control plane and a user plane are split, and are implemented by using different entities: a control plane CU entity (namely, a CU-CP entity) and a user plane CU entity (namely, a CU-UP entity). The CU-CP entity and the CU-UP entity may be coupled to a DU, to jointly complete a function of a RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs.

Based on FIG. 3, FIG. 4 is a schematic diagram of air interface protocol stack distribution. As shown in FIG. 4, for both a user plane and a control plane, the air interface protocol stack may be that an RLC layer, a MAC layer, and a PHY layer are on a DU, and a PDCP layer and protocol layers above the PDCP layer are on a CU.

It should be noted that, in the architectures shown in FIG. 2 to FIG. 4, signaling generated by the CU may be sent to the terminal device by using the DU, or signaling generated by the terminal device may be sent to the CU by using the DU. The DU may transparently transmit the signaling to the terminal device or the CU by directly encapsulating the signaling at a protocol layer without parsing the signaling. In the following embodiments, if transmission of such signaling between the DU and the terminal device is involved, sending or receiving of the signaling by the DU includes this scenario. For example, signaling at the RRC layer or the PDCP layer is finally processed as data at a physical layer and sent to the terminal device, or is converted from received data at a physical layer. In this architecture, it may also be considered that the signaling at the RRC layer or the PDCP layer is sent by the DU, or sent by the DU and a radio frequency apparatus.

### 3. CN

The CN may include one or more CN devices. A 5G communication system is used as an example. The CN may include an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, a network exposure function (network exposure function, NEF) network element, a unified data repository (unified data repository, UDR) network element, and the like.

The AMF network element is a control plane network element provided by an operator network, and is responsible for access control and mobility management for accessing the operator network by a terminal device, for example, including functions such as mobility status management, allocation of a temporary user identity, and user authentication and authorization.

The SMF network element is a control plane network element provided by the operator network, and is responsible for managing a protocol data unit (protocol data unit, PDU) session of the terminal device. The PDU session is a channel used to transmit a PDU, and the terminal device needs to transmit a PDU to the DN through the PDU session. The SMF network element is responsible for establishment, maintenance, deletion, and the like of the PDU session. The SMF network element includes session-related functions such as session management (for example, session establishment, modification, and release, including tunnel maintenance between the UPF and the RAN), selection and control of the UPF network element, service and session continuity (service and session continuity, SSC) mode selection, and roaming.

The UPF network element is a gateway provided by an operator, and is a gateway for communication between the operator network and the DN. The UPF network element includes user plane-related functions such as data packet routing and transmission, packet detection, service usage reporting, quality of service (Quality of Service, QoS) processing, lawful interception, uplink packet detection, and downlink data packet storage.

The PCF network element is a control plane function provided by the operator, and is configured to provide a policy of the PDU session for the SMF network element. The policy may include a charging-related policy, a QoS-related policy, an authorization-related policy, and the like.

The UDM network element is a control plane network element provided by an operator, and is responsible for storing information such as a subscriber permanent identifier (subscriber permanent identifier, SUPI), a security context (security context), and subscription data of a subscriber in an operator network.

The AF network element is a function network element configured to provide various business services and can interact with a core network through another network element and interact with a policy management framework to perform policy management.

In addition, the CN may further include another possible network element, for example, a network exposure function (network exposure function, NEF) network element or a unified data repository (unified data repository, UDR) network element. The NEF network element is configured to provide a framework, authentication, and an interface that are related to network capability exposure and transmit information between a 5G system network function and another network function. The UDR network element is mainly configured to store subscription data, policy data, structured data for exposure, and application data that are related to a user.

### 4. DN

The DN, also be referred to as a packet data network (packet data network, PDN), is a network located outside an operator network. The operator network may access a plurality of DNs. Application servers corresponding to a plurality of services may be deployed in the DN, to provide a plurality of possible services for the terminal device. An application layer corresponding to an application layer of the terminal device may be disposed in the application server.

For ease of understanding embodiments of this application, several basic concepts in embodiments of this application are briefly described.

### 1. RRC state

(1) A terminal device in a radio resource control connected (radio resource control connected, RRC CONNECTED) state means that an RRC connection is established between the terminal device and an access network device, and the access network device stores information of the terminal device (for example, one or more of access stratum context information and radio configuration information of the terminal device). The RRC connection is a dedicated connection such as a connection of a data radio bearer (data radio bearer, DRB) or a signaling radio bearer 1 (signaling radio bearer, SRB1), and does not include a common connection of an SRB0.
(2) The terminal device in a radio resource control idle (radio resource control idle, RRC IDLE) state means that there is no RRC connection between the terminal device and the access network device, and the access network device does not store information of the terminal device.
(3) The terminal device in a radio resource control inactive (radio resource control inactive, RRC INACTIVE) state means that the terminal device moves in a radio access network-based notification area (radio access network-based notification area, RNA), and may not notify the access network device. The terminal device stores a context of the terminal device, and a last serving access network device (last serving gNB) stores the context of the terminal device, and is connected to a next generation (next generation, NG) interface of an access and mobility management function network element (access and mobility management function, AMF) and a user plane function (user plane function, UPF). In the RRC INACTIVE state, the dedicated RRC connection between the terminal device and the access network device is suspended, and may be subsequently resumed. For example, the terminal device resumes the RRC connection by initiating an RRC resume (resume) process. The terminal device may perform cell reselection in the RRC INACTIVE state.

### 2. Small data transmission (small data transmission, SDT)

SDT is also referred to as early data transmission (early data transmission, EDT). For UE in a non-connected state, small data transmission (for example, data reporting of a smart meter) may be performed in a simple signaling process, to avoid an RRC status change and RRC signaling overheads.

A manner in which the terminal device performs small data transmission includes configured grant (configured grant, CG)-SDT and random access (random access, RA)-SDT.

Currently, if a serving base station includes a CU and a DU that are split, the DU does not store a context of the UE in an inactive state. Each time the UE initiates small data transmission, the DU needs to initiate a signaling interaction process with the CU, to resume transmission between the DU and the CU. This causes a sending delay and low sending efficiency. Therefore, when the DU stores the context of the UE in the inactive state, redundant information interaction between the DU and the CU is reduced based on the context information, to improve processing efficiency of the DU.

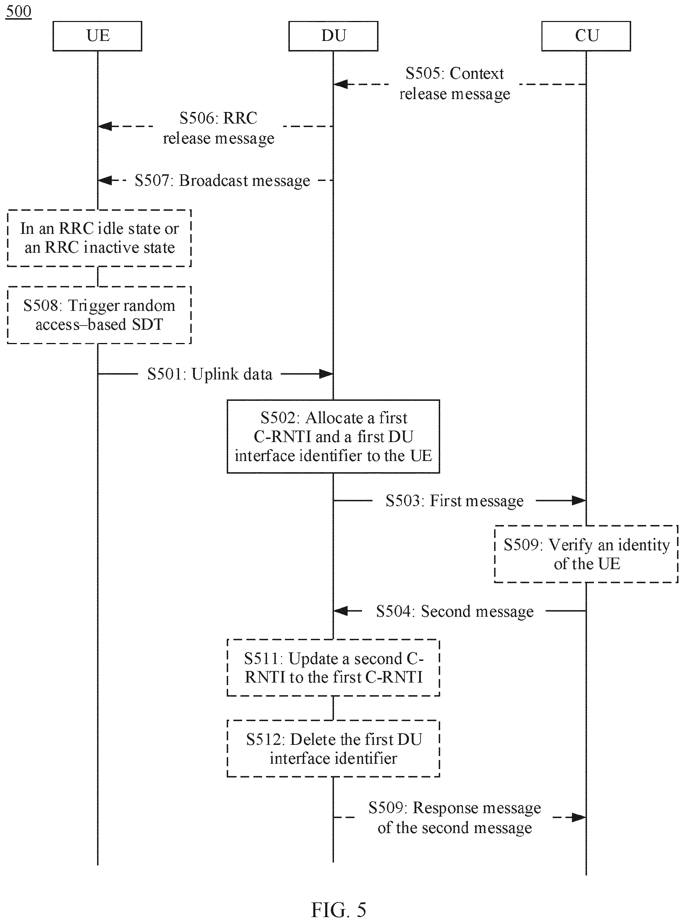

FIG. 5 is a schematic diagram of a communication method 500 according to an embodiment of this application. The method 500 is applicable to SDT. As shown in FIG. 5, the communication method includes the following steps.

S501: ADU receives uplink data sent by UE. Correspondingly, the UE sends the uplink data to the DU.

For example, the UE may send the uplink data to the DU in a random access procedure, where the UE may be in an RRC idle state or an RRC inactive state.

Optionally, the uplink data may be SDT DRB data or SDT SRB data, and the SDT SRB data may be SDT non-access stratum (non-access stratum, NAS) data.

In addition, it should be noted that the uplink data may further include an RRC resume request message sent by the UE, where the RRC resume request message carries an inactive radio network temporary identifier (Inactive Radio network temporary identify, I-RNTI) and identity verification information of the UE. Optionally, the uplink data may be an Msg3 in a four-step random access procedure. The I-RNTI is used to identify an identifier of a base station in which the UE is located and is used to uniquely identify a UE identifier in the base station.

S502: The DU allocates a first cell radio network temporary identifier (cell radio network temporary identify, C-RNTI) and a first DU interface identifier to the UE.

Specifically, after the DU monitors, on an uplink grant resource, the uplink data sent by the UE, because the DU cannot decode the RRC resume request message sent by the UE, and cannot identify that a context of the UE has been stored in the DU, the DU allocates the first C-RNTI and the first DU interface identifier to the UE. The first DU interface identifier may be an F1 application protocol (F1 application protocol, F1AP) interface identifier of the UE, for example, may be a first UE DU F1AP ID. For the F1 application protocol, refer to a current 5G related technology. Details are not described herein in this application.

S503: The DU sends a first message to the CU.

Specifically, after the DU allocates the first C-RNTI and the first DU interface identifier to the UE, the DU sends the first message to the CU, and the first message carries the first C-RNTI and the first DU interface identifier.

It should be noted that the first message further includes an RRC resume request.

In a possible implementation, the first message may be an F1AP message, for example, may be initial uplink RRC message transfer (initial uplink RRC message transfer). The initial uplink RRC transfer may carry the first C-RNTI, the first DU F1AP ID, and the RRC resume request that are allocated by the DU to the UE in S502. The RRC resume request carries the I-RNTI and the identity verification information of the UE.

Optionally, the first message may further carry information indicating the UE to initiate SDT.

Optionally, after the DU allocates the first C-RNTI and the first DU interface identifier to the UE, the DU stores the first C-RNTI and the first DU interface identifier.

S504: The CU sends a second message to the DU.

After the CU receives the first message sent by the DU, the CU verifies identity information of the UE by using the identity of the UE in the first message, and determines that the context of the UE initiating SDT is stored in the DU. Therefore, the CU does not need to reallocate a CU interface identifier to the UE, and does not need to send a context setup request to the DU. The CU needs only to send the second message to the DU, and notify the DU of the identity of the UE by using the second message, so that the DU can correspond the stored context information of the UE to the first C-RNTI or the first DU interface identifier, and the DU scrambles a physical downlink control channel (physical downlink control channel, PDCCH) by using the first C-RNTI, and associates the first C-RNTI with the context of the UE.

Optionally, the second message carries the first C-RNTI and/or the first DU interface identifier.

Optionally, the second message may further carry a second DU interface identifier and/or a second CU interface identifier.

It should be understood that before the DU receives the second message of the CU, the context information of the UE stored in the DU may include the second DU interface identifier and/or the second CU interface identifier. Optionally, the context information of the UE stored in the DU may further include a second C-RNTI. The second DU interface identifier and the second CU interface identifier are also stored in the CU, and are allocated to the UE through negotiation between the CU and the DU.

In a possible implementation, the second message may be a UE context modification request message.

In addition, if verification fails, the CU may indicate to notify the DU to release the context of the UE, and notify the UE to switch to the RRC IDLE state.

Based on this embodiment of this application, in an SDT procedure, when the CU successfully verifies the identity of the UE, and determines that the context of the UE initiating SDT is stored in the DU, the CU does not need to allocate the CU interface identifier to the UE or send a context setup request to the DU. The CU needs only to use an F1AP message to carry the CU interface identifier and the DU interface identifier that are stored in the DU, and notify the DU of the C-RNTI newly allocated by the DU to the UE, so that the DU scrambles the PDCCH by using the new C-RNTI. That is, a UE context modification procedure is used between the CU and the DU, to avoid redundant configuration interaction between the CU and the DU. This can reduce processing load of the DU and improve processing efficiency.

In a possible implementation, the communication method 500 in this application may further include another step.

S505: The CU sends a context release message to the DU. In this embodiment of this application, the context release message may also be referred to as a "terminal context release message" or a "UE context release message".

For example, when the CU determines to notify the UE to switch from an RRC connected state to the RRC inactive state, the CU sends the context release message to the DU.

Optionally, the context release message carries first indication information, and the first indication information indicates the DU to store the context information of the UE.

Optionally, the context release message may carry an RRC release message. Optionally, the RRC release message may carry a radio bearer configuration for small data transmission.

It should be understood that, in this embodiment of this application, after the DU receives the context release message sent by the CU, the DU retains the context information of the UE instead of deleting the context information of the UE.

The context information of the UE may include at least one of the following information: a F1-AP dedicated connection, an F1 tunnel configuration, a radio link control (radio link control, RLC) radio bearer configuration, an RNTI used to preconfigure scheduling retransmission, and the second C-RNTI. The context information of the UE is associated with the second C-RNTI. The F1-AP dedicated connection may include an F1AP identifier of a CU associated with the UE, for example, may be a second gNB-CU UE F1AP ID. The second gNB-CU UE F1AP ID uniquely identifies a UE association over an F1 interface within the gNB-CU. In addition, the F1-AP dedicated connection may further include an F1AP identifier of the DU associated with the UE, for example, may be a second gNB-DU UE F1AP ID. The second gNB-DU UE F1AP ID uniquely identifies a UE association over an F1 interface within the gNB-DU. The F1 tunnel configuration may include downlink user plane transport layer information, for example, may be a transport layer address and GTP tunnel identifier information that are allocated by the DU. The F1 tunnel configuration may further include uplink user plane transport layer information, for example, a transport layer address and GTP tunnel identifier information that are allocated by the CU. RLC radio bearer configuration information is RLC configuration information used to identify a bearer.

It may be understood that the context release message may be replaced with another F1AP message, for example, a downlink RRC message.

S506: The DU sends the RRC release message to the UE.

Specifically, after the DU receives the RRC release message sent by the CU, the DU stores the context of the UE, and sends the RRC release message to the UE. The RRC release message indicates the UE to enter the inactive state.

S507: The DU sends a broadcast message.

Specifically, the DU configures, in the broadcast message, a random access resource for SDT.

S508: The UE triggers random access-based SDT.

Specifically, when the UE needs to initiate random access-based SDT, the UE triggers a random access-based SDT procedure, and sends the uplink data to the DU by performing S501.

It should be understood that, for the random access-based SDT procedure triggered by the UE, refer to descriptions of a current related technology. For example, the procedure may include: The UE sends an SDT preamble to the DU, and the DU sends a random access response message to the UE. Details are not described herein in this application.

S509: The CU verifies the identity of the UE.

Specifically, after receiving the initial uplink RRC transfer sent by the DU, the CU verifies the identity information of the UE based on the I-RNTI and the identity verification information that are of the UE and that are carried in the initial uplink RRC transfer. When the CU verifies that the identity of the UE is correct, the CU may perform S504. For example, the CU sends a UE context modification request message to the DU. If verification fails, the CU may indicate to notify the DU to release the context of the UE, and notify the UE to switch to the RRC IDLE state.

S510: The DU updates the second C-RNTI to the first C-RNTI.

Specifically, after the DU receives the second message sent by the CU, if the second message carries the first C-RNTI, the DU may find the stored context information of the UE based on the second DU interface identifier and the second CU interface identifier that are carried in the second message, associate the first C-RNTI with the context of the UE, and delete or release the second C-RNTI in the context information of the UE, that is, update the second C-RNTI to the first C-RNTI.

Alternatively, after the DU receives the second message sent by the CU, if the second message carries the first DU interface identifier, the DU determines the first C-RNTI based on the first DU interface identifier, finds the stored context information of the UE based on the second DU interface identifier and the second CU interface identifier that are carried in the second message, associates the first C-RNTI with the context of the UE, and deletes the second C-RNTI in the context information of the UE.

It should be noted that S510 may be immediately performed after S504 or performed after SDT of the UE ends. Preferably, this step is performed after SDT of the UE ends.

S511: The DU deletes the first DU interface identifier, or updates the second DU interface identifier to the first DU interface identifier.

Specifically, in a possible implementation, because the DU has determined the identity of the UE, the DU may select to continue to retain the second DU interface identifier in the context information of the UE stored in the DU, and delete or release the first DU interface identifier allocated by the DU to the UE.

Alternatively, in another possible implementation, the DU may update the second DU interface identifier to the first DU interface identifier.

Specifically, after the DU receives the second message sent by the CU, if the second message carries the first C-RNTI, the DU may determine the first DU interface identifier based on the first C-RNTI, and delete or release the first DU interface identifier, or update the second DU interface identifier to the first DU interface identifier.

Alternatively, after the DU receives the second message sent by the CU, if the second message carries the first DU interface identifier, the DU determines the first C-RNTI based on the first DU interface identifier, associates the first C-RNTI with the context of the UE, and deletes or releases the first DU interface identifier, or updates the second DU interface identifier to the first DU interface identifier.

It should be noted that the foregoing process of releasing the first DU interface identifier may be performed after SDT ends.

S512: The DU sends a response message of the second message to the CU.

Specifically, when the second message is a terminal context modification request message, the DU sends a terminal context modification response message to the CU, to indicate that the DU has completed modification of the context information of the UE.

It should be noted that the CU interface identifier or the DU interface identifier may be an F1AP interface identifier of the UE, for example, may be a first UE DU F1AP ID, a second UE DU F1AP ID, or a second UE CU F1AP ID. In addition, the second message may be replaced with another F1 interface message, for example, RRC message transfer signaling.

Based on the solution provided in this application, in an SDT procedure, when the CU successfully verifies the identity of the UE, and determines that the context of the UE initiating SDT is stored in the DU, the CU does not need to allocate the CU interface identifier to the UE or send a context setup request to the DU. The CU needs only to use an F1AP message to carry the CU interface identifier and the DU interface identifier that are stored in the DU, and notify the DU of the C-RNTI newly allocated by the DU to the UE, so that the DU scrambles the PDCCH by using the new C-RNTI. That is, a UE context modification procedure is used between the CU and the DU, to avoid redundant configuration interaction between the CU and the DU. This can reduce processing load of the DU and improve processing efficiency.

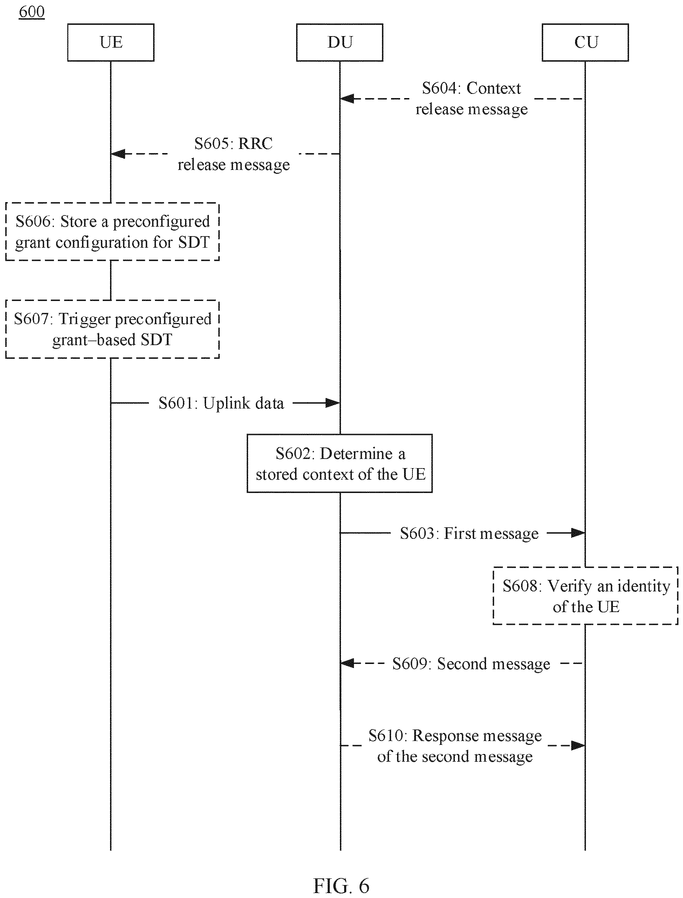

FIG. 6 is a schematic diagram of a communication method 600 according to an embodiment of this application. The method 600 is applicable to a preconfigured grant-based SDT procedure. As shown in FIG. 6, the communication method includes the following steps.

S601: ADU receives uplink data sent by UE. Correspondingly, the UE sends the uplink data to the DU.

For example, the UE may send the uplink data to the DU in the preconfigured grant-based SDT procedure, where the UE may be in an RRC idle state or an RRC inactive state.

Optionally, the uplink data may be SDT DRB data or SDT SRB data.

In addition, it should be noted that the uplink data may further include an RRC resume request message sent by the UE, where the RRC resume request message carries an inactive radio network temporary identifier (Inactive Radio network temporary identify, I-RNTI) and identity verification information of the UE. The I-RNTI is used to identify an identifier of a base station in which the UE is located and is used to uniquely identify a UE identifier in the base station.

Optionally, the UE starts to monitor a configured scheduling radio network temporary identifier (configured scheduling radio network temporary identify, CS-RNTI) and a C-RNTI in a connected state. The CS-RNTI is used to schedule and retransmit the uplink sent on a preconfigured grant. The C-RNTI is used to schedule uplink new transmission, downlink new transmission, or control instruction sending.

S602: The DU determines stored context information of the UE.

After the DU receives, on a dedicated uplink grant of the UE, the uplink data sent by the UE, the DU determines the stored context information of the UE.

It should be understood that the context information of the UE stored in the DU may include a second DU interface identifier and/or a second CU interface identifier. Optionally, the context information of the UE stored in the DU may further include a second C-RNTI. The second DU interface identifier and the second CU interface identifier are also stored in the CU, and are allocated to the UE through negotiation between the CU and the DU.

S603: The DU sends a first message to the CU.

Specifically, after the DU determines the stored context information of the UE, the DU sends the first message to the CU, and the second DU interface identifier is carried.

It should be noted that the first message further includes an RRC resume request.

In a possible implementation, the first message may be an F1AP message, for example, may be initial uplink RRC message transfer (initial uplink RRC message transfer) or may be uplink RRC message transfer.

Optionally, if the DU receives the uplink data and the RRC resume request message on the dedicated uplink grant of the UE, the RRC resume request message is carried in the initial uplink RRC message transfer or the uplink RRC message transfer.

Optionally, if the uplink data received by the DU on the dedicated uplink grant of the UE is SDT SRB data, the SDT SRB data, for example, a PDCP PDU of an SRB2, is carried in the initial uplink RRC message transfer or the uplink RRC message transfer.

In addition, if verification fails, the CU may indicate to notify the DU to release the context of the UE, and notify the UE to switch to the RRC IDLE state.

Based on this embodiment of this application, in the SDT procedure, when the DU determines that the context of the UE initiating SDT is stored in the DU, only an F1AP message is used, to carry the DU interface identifier stored in the DU and send the uplink data to the CU. This avoids redundant configuration interaction between the CU and the DU, and can reduce processing load of the DU and improve processing efficiency.

In a possible implementation, the communication method 600 in this application may further include another step.

S604: The CU sends a context release message to the DU. In this embodiment of this application, the context release message may also be referred to as a "terminal context release message" or a "UE context release message".

For example, when the CU determines to notify the UE to switch from an RRC connected state to the RRC inactive state, the CU sends the context release message to the DU.

Optionally, the context release message carries first indication information, and the first indication information indicates the DU to store the context information of the UE.

Optionally, the context release message may carry an RRC release message. Optionally, the RRC release message may carry a preconfigured grant configuration for small data transmission and a radio bearer configuration that allows small data transmission. The preconfigured grant may be received by the CU from the DU before the CU initiates an RRC release.

It should be understood that, in this embodiment of this application, after the DU receives the context release message sent by the CU, the DU retains the context information of the UE instead of deleting the context information of the UE.

The context information of the UE may include at least one of the following information: a F1-AP dedicated connection, an F1 tunnel configuration, a radio link control (radio link control, RLC) radio bearer configuration, and preconfigured grant configuration information. The context information of the UE is associated with the second C-RNTI. The F1-AP dedicated connection may include an F1AP identifier of a CU associated with the UE, for example, may be a second gNB-CU UE F1AP ID. The second gNB-CU UE F1AP ID uniquely identifies a UE association over an F1 interface within the gNB-CU. In addition, the F1-AP dedicated connection may further include an F1AP identifier of the DU associated with the UE, for example, may be a second gNB-DU UE F1AP ID. The second gNB-DU UE F1AP ID uniquely identifies a UE association over an F1 interface within the gNB-DU. The F1 tunnel configuration may include downlink user plane transport layer information, for example, may be a transport layer address and GTP tunnel identifier information that are allocated by the DU. The F1 tunnel configuration may further include uplink user plane transport layer information, for example, a transport layer address and GTP tunnel identifier information that are allocated by the CU. RLC radio bearer configuration information is RLC configuration information used to identify a bearer. The preconfigured grant configuration information may include a time-frequency resource, PDCCH search space, and a CS-RNTI.

It may be understood that the context release message may be replaced with another F1AP message, for example, a downlink RRC message.

S605: The DU sends the RRC release message to the UE.

Specifically, after the DU receives the RRC release message sent by the CU, the DU stores the context of the UE, and sends the RRC release message to the UE. The RRC release message indicates the UE to enter the inactive state.

S606: The UE stores the preconfigured grant configuration for small data transmission.

Specifically, after receiving an RRC connection release message, the UE stores the preconfigured grant configuration for small data transmission, and enters the inactive state.

S607: The UE triggers preconfigured grant-based SDT.

Specifically, when the UE needs to initiate preconfigured grant-based SDT, the UE triggers a preconfigured grant-based SDT procedure, and sends the uplink data to the DU by performing S601.

S608: The CU verifies an identity of the UE.

Specifically, after the CU receives initial uplink RRC transfer sent by the DU, when the CU receives the SDT SRB data, the CU performs integrity verification by using a message authentication code for integrity (message authentication code for integrity, MAC-I). If integrity verification succeeds, identity verification succeeds.

When the CU receives an RRC connection resume request, the CU verifies short MAC-I. If verification succeeds, identity verification succeeds.

S609: The CU sends a second message to the DU.

Optionally, after the CU successfully verifies the identity of the UE, if the CU wants to modify the context information of the UE, the CU sends the second message to the DU.

Optionally, the second message may carry the second DU interface identifier and/or the second CU interface identifier.

It should be understood that before the DU receives the second message of the CU, the context information of the UE stored in the DU may include the second DU interface identifier and/or the second CU interface identifier.

In a possible implementation, the second message may be a UE context modification request message.

S610: The DU sends a response message of the second message to the CU.

Specifically, after the CU sends the second message to the DU, if the second message is a terminal context modification request message, the DU sends a terminal context modification response message to the CU, to indicate that the DU has completed modification of the context information of the UE.

It should be noted that the CU interface identifier or the DU interface identifier may be an F1AP interface identifier of the UE, for example, may be a first UE DU F1AP ID, a second UE DU F1AP ID, or a second UE CU F1AP ID. In addition, the second message may be replaced with another F1 interface message, for example, RRC message transfer signaling.

Based on the solution provided in this application, in the SDT procedure, the DU determines that the context of the UE initiating SDT is stored, and only an F1AP message is used, to carry the DU interface identifier stored in the DU and complete uplink data transmission. When the CU needs to modify the context information of the UE, a UE context modification procedure is used between the CU and the DU, to avoid redundant configuration interaction between the CU and the DU. This can reduce processing load of the DU and improve processing efficiency.

For embodiments in FIG. 5 and FIG. 6, it should be noted that:
(1) The step numbers of each flowchart described in the embodiments are merely a procedure execution example, and do not constitute a limitation on a step execution sequence. In embodiments of this application, there is no strict execution sequence between steps having no time sequence dependence relationship with each other. In addition, not all steps shown in each flowchart are necessarily performed steps, and some steps may be added or deleted based on each flowchart according to an actual requirement.
(2) In the foregoing embodiments, some messages and parameters in the 5G communication system are used. However, in specific implementation, different messages or message names may be used, which is not limited in embodiments of this application.

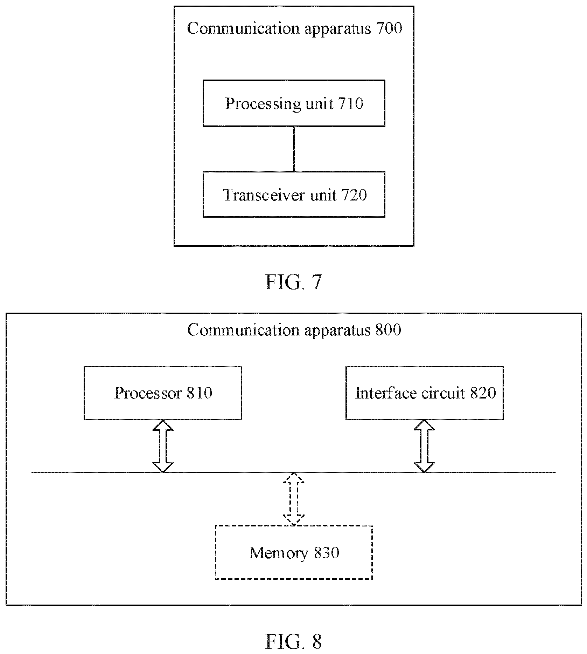

The foregoing describes in detail the communication method provided in embodiments of this application with reference to FIG. 5 and FIG. 6. The following describes in detail a communication apparatus provided in embodiments of this application with reference to FIG. 7 and FIG. 8.

FIG. 7 and FIG. 8 each are a schematic diagram of a structure of a possible communication apparatus according to an embodiment of this application. As shown in FIG. 7, a communication apparatus 700 includes a processing unit 710 and a transceiver unit 720.

The communication apparatus 700 is a module configured to implement the functions or operations of the DU in the method embodiments shown in FIG. 5 and FIG. 6, or the communication apparatus 700 is a module configured to implement the functions or operations of the CU in the method embodiments shown in FIG. 5 and FIG. 6. The module may be all or partially implemented by using software, hardware, firmware, or any combination thereof.

When the communication apparatus 700 is configured to implement the function of the DU in the method embodiment shown in FIG. 5, the processing unit 710 is configured to allocate a first cell radio network temporary identifier C-RNTI and a first DU interface identifier to a terminal device. The transceiver unit 720 is configured to receive uplink data from the terminal device, send a first message to the CU, and receive a second message from the CU.

When the communication apparatus 700 is configured to implement the function of the CU in the method embodiment shown in FIG. 5, the processing unit 710 is configured to verify an identity of the terminal device. The transceiver unit 720 is configured to send the second message to the DU.

When the communication apparatus 700 is configured to implement the function of the DU in the method embodiment shown in FIG. 6, the processing unit 710 is configured to determine stored context information of UE. The transceiver unit 720 is configured to receive uplink data from a terminal device, send a first message to the CU, and receive a second message from the CU.

When the communication apparatus 700 is configured to implement the function of the CU in the method embodiment shown in FIG. 6, the processing unit 710 is configured to verify an identity of the terminal device. The transceiver unit 720 is configured to send the second message to the DU.

For more detailed descriptions of the processing unit 710 and the transceiver unit 720, directly refer to related descriptions in the method embodiment shown in FIG. 5 or FIG. 6. Details are not described herein again.

FIG. 8 is a schematic diagram of a structure of another possible communication apparatus according to an embodiment of this application. As shown in FIG. 8, a communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to store instructions to be executed by the processor 810, store input data required for running the instructions by the processor 810, or store data generated after the processor 810 runs the instructions.

When the communication apparatus 800 is configured to implement the method shown in FIG. 5 or FIG. 6, the processor 810 is configured to implement functions of the processing unit 710, and the interface circuit 820 is configured to implement functions of the transceiver unit 720.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

In embodiments of this application, the processor may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or a part of the foregoing embodiments may be implemented by software, hardware, firmware, or any combination thereof. When software is used to implement the embodiments, all or some of the embodiments may be implemented in a form of a computer program product. The computer program product includes one or more computer programs and instructions. When the computer programs or instructions are loaded and executed on a computer, all or some of the processes or functions in embodiments of this application are executed. The computer may be a general-purpose computer, a dedicated computer, a computer network, a network device, a terminal device, or another programmable apparatus. The computer programs or the instructions may be stored in a computer-readable storage medium, or may be transmitted through the computer-readable storage medium. The computer-readable storage medium may be any usable medium accessible by a computer, or a data storage device like a server integrating one or more usable media. The usable medium may be a magnetic medium, for example, a floppy disk, a hard disk, or a magnetic tape; may be an optical medium, for example, a DVD; or may be a semiconductor medium, for example, a solid-state drive (solid state disk, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. The sequence numbers of the foregoing processes do not mean an execution sequence, and the execution sequence of the processes should be determined based on functions and internal logic of the processes.

## Claims

1. A communication method, wherein the method is applied to a distributed unit DU, and the method comprises:
receiving uplink data from a terminal device;
allocating a first cell radio network temporary identifier C-RNTI and a first DU interface identifier to the terminal device;
sending a first message to a central unit CU, wherein the first message comprises the first C-RNTI and the first DU interface identifier; and
receiving a second message from the CU, wherein the second message comprises the first C-RNTI or the first DU interface identifier.

2. The method according to claim 1, wherein the terminal device is in a radio resource control RRC idle state or an RRC inactive state.

3. The method according to claim 1 or 2, wherein the method further comprises:
before receiving the uplink data, storing, by the DU, context information of the terminal device, wherein the context information comprises a second C-RNTI; and
after receiving the second message, updating the second C-RNTI to the first C-RNTI.

4. The method according to any one of claims 1 to 3, wherein the context information further comprises a second DU interface identifier.

5. The method according to claim 4, wherein the method further comprises:
after receiving the second message, deleting the first DU interface identifier, or updating the second DU interface identifier to the first DU interface identifier.

6. The method according to claim 3, wherein when the second message comprises the first DU interface identifier, the updating the second C-RNTI to the first C-RNTI specifically comprises:
determining the first C-RNTI based on the first DU interface identifier; and
updating the second C-RNTI to the first C-RNTI.

7. The method according to claim 5, wherein when the second message comprises the first C-RNTI, the deleting the first DU interface identifier, or updating the second DU interface identifier to the first DU interface identifier specifically comprises:
determining the first DU interface identifier based on the first C-RNTI; and
deleting the first DU interface identifier, or updating the second DU interface identifier to the first DU interface identifier.

8. The method according to any one of claims 1 to 7, wherein the receiving uplink data from a terminal device specifically comprises:
receiving the uplink data from the terminal device in a random access procedure.

9. The method according to any one of claims 1 to 8, wherein the first message further comprises an RRC resume request message, and the uplink data comprises the RRC resume request message.

10. The method according to any one of claims 7 to 9, wherein the second message further comprises the second DU interface identifier and a second CU interface identifier, and the second CU interface identifier is stored in the context information.

11. The method according to any one of claims 7 to 9, wherein the second message is a context modification request message.

12. The method according to claim 11, wherein the method further comprises: sending a context modification response message to the CU.

13. The method according to any one of claims 1 to 12, wherein the method further comprises:
before receiving the uplink data, receiving an RRC release message and indication information from the CU, wherein the indication information indicates the DU to store the context information of the terminal device; and
sending the RRC release message to the terminal device.

14. A communication method, comprising:
receiving, by a distributed DU, uplink data from a terminal device;
allocating, by the DU, a first cell radio network temporary identifier C-RNTI and a first DU interface identifier to the terminal device;
sending, by the DU, a first message to a central unit CU, wherein the first message comprises the first C-RNTI and the first DU interface identifier; and
sending, by the CU, a second message to the DU, wherein the second message comprises the first C-RNTI or the first DU interface identifier.

15. The method according to claim 14, wherein the terminal device is in a radio resource control RRC idle state or an RRC inactive state.

16. The method according to claim 14 or 15, wherein the method further comprises:
before receiving the uplink data, storing, by the DU, context information of the terminal device, wherein the context information comprises a second C-RNTI; and
after receiving the second message, updating, by the DU, the second C-RNTI to the first C-RNTI.

17. The method according to any one of claims 14 to 16, wherein the context information further comprises a second DU interface identifier.

18. The method according to claim 17, wherein the method further comprises:
after receiving the second message, deleting, by the DU, the first DU interface identifier, or updating the second DU interface identifier to the first DU interface identifier.

19. The method according to claim 16, wherein when the second message comprises the first DU interface identifier, the updating the second C-RNTI to the first C-RNTI specifically comprises:
determining, by the DU, the first C-RNTI based on the first DU interface identifier; and
updating, by the DU, the second C-RNTI to the first C-RNTI.

20. The method according to claim 18, wherein when the second message comprises the first C-RNTI, the deleting the first DU interface identifier, or updating the second DU interface identifier to the first DU interface identifier specifically comprises:
determining, by the DU, the first DU interface identifier based on the first C-RNTI; and
deleting, by the DU, the first DU interface identifier, or updating the second DU interface identifier to the first DU interface identifier.

21. The method according to any one of claims 14 to 20, wherein the receiving, by a DU, uplink data from a terminal device specifically comprises:
receiving, by the DU, the uplink data from the terminal device in a random access procedure.

22. The method according to any one of claims 14 to 21, wherein the first message further comprises an RRC resume request message, and the uplink data comprises the RRC resume request message.

23. The method according to any one of claims 20 to 22, wherein the second message further comprises the second DU interface identifier and a second CU interface identifier, and the second CU interface identifier is stored in the context information.

24. The method according to any one of claims 20 to 22, wherein the second message is a context modification request message.

25. The method according to claim 24, wherein the method further comprises:
sending, by the DU, a context modification response message to the CU.

26. The method according to any one of claims 14 to 25, wherein the method further comprises:
before the DU receives the uplink data, sending, by the CU, an RRC release message and indication information to the DU, wherein the indication information indicates the DU to store the context information of the terminal device; and
sending, by the DU, the RRC release message to the terminal device.

27. A communication apparatus, comprising a module configured to perform the method according to any one of claims 1 to 13 or a module configured to perform the method according to any one of claims 14 to 26.

28. A communication apparatus, comprising a processor and a memory, wherein the processor is coupled to the memory, and the processor is configured to control the apparatus to implement the method according to any one of claims 1 to 13 or the method according to any one of claims 14 to 26.

29. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 13 or the method according to any one of claims 14 to 26 by using a logic circuit or by executing code instructions.

30. A computer-readable storage medium, wherein the storage medium stores a computer program or instructions, and when the computer program or the instructions are executed by a communication apparatus, the method according to any one of claims 1 to 13 or the method according to any one of claims 14 to 26 is implemented.
